# EUROPEAN PATENT SPECIFICATION

(11) **EP 2 794 670 B1**
(45) Date of publication and mention of the grant of the patent: **02.08.2017**
(21) Application number: 12808804.4
(22) Date of filing: 17.12.2012
(51) Int. Cl.: C08F 2/44, C08F 220/18, C08F 220/20, C08F 220/44, C08F 230/02, C09D 11/50, C08F 2/18, C08F 212/08

(54) **FLUORESCENT POLYACRYLATE DISPERSIONS**
FLUORESZIERENDE POLYACRYLAT-DISPERSIONEN
DISPERSIONS DE POLYACRYLATE FLUORESCENTES

(30) Priority: 22.12.2011 EP 11195157
(43) Date of publication of application: 29.10.2014
(73) Proprietor: Covestro Deutschland AG, 51373 Leverkusen (DE)
(72) Inventor: SCHRINNER, Marc Claudius, 201507 Caojing, Shanghai (CN); GEWISS, Heinz-Dietmar, 40668 Meerbusch (DE)
(74) Representative: Levpat
(86) International application number: PCT/EP2012/075838
(87) International publication number: WO 2013/092515

(56) References cited:
- EP-A1- 1 266 941
- EP-A2- 0 225 612
- EP-A2- 0 947 557
- US-A- 4 151 143

## Description

The present invention relates to aqueous secondary polyacrylate dispersion comprising a fluorescent dye. The invention furthermore relates to its use as a fluorescent ink and to a method of producing such dispersion.

Polyacrylate dispersions are for example described in US 7,863,372 which deals with aqueous secondary copolymer dispersions, to a process for preparing them and to their use for producing high-grade coatings, especially for wood. The dispersions comprise a copolymer (P) synthesized from a mixture of free-radically polymerizable monomers (M) comprising (M1) cycloaliphatic esters of acrylic and/or methylacrylic acid and also (M2) vinyl esters of aliphatic carboxylic acids.

WO 97/27063 A1 relates to a process for producing a multi-layer correcting and/or marking material. In said process, a film is applied to a substrate which can be released therefrom and in particular contains a dye and/or pigment. A further layer containing an adhesive is then applied over the film thus obtained. The removable film is applied in the form of an aqueous suspension containing a brittle and a film-forming binder. The process makes it possible to dispense with organic solvents. A correcting or marking agent thus produced exhibits good tear-off properties. Dependent claims disclose that an aqueous terpolymer dispersion based on vinyl acetate and acrylic acid esters and/or an aqueous dispersion of a copolymer based on acrylic acid esters with the combined use of acrylonitrile is used as the film-forming agent and that an aqueous dispersion of an acrylic polymer and/or an aqueous dispersion of a copolymer based on acrylic acid esters with the combined use of acrylonitrile is used as the friable binding agent. Furthermore, a non-covering dye may be used which also may be a fluorescing dye.

US 2010/283007 A1 discloses flexible luminescent paints which are prepared from physical blends of hybrid epoxy acrylic resins, cementicious acrylic resins and optionally pure acrylic coating resins together with monopropylene glycol, suspension additives, rheological additives and photoluminescent pigments. The luminescent paints are reported to exhibit bright, even and long-lasting photoluminescent afterglow, excellent flexibility in both thin and thick layers, and are suitable for spraying, brushing, rolling and screen printing. Optional fluorescent pigments may be utilized to give daylight coloration and up-convert the photoluminescent emissions to the fluorescent emissions color.

It would be desirable to have a water-based polyacrylate dispersion ink that can be used, for example, in marking printed text with an improved fluorescence over conventional inks.

The present invention has the object of providing such dispersion. Accordingly, this object has been achieved by aqueous secondary polyacrylate dispersion obtainable by a method comprising the steps of:
a) reacting a first reaction mixture comprising:
   (M1) hydroxy-functional, free-radically polymerizable monomers; and
   (M2) hydroxyl- and carboxyl-free (meth)acrylic esters having C1 to C8 hydrocarbon radicals in the alcohol moiety and/or vinyl aromatics,
   thereby obtaining a first reaction mixture product;
b) adding a second reaction mixture comprising:
   (M3) acid-functional, free-radically polymerizable monomers; and
   (M4) hydroxyl- and carboxyl-free (meth)acrylic esters having C1 to C8 hydrocarbon radicals in the alcohol moiety and/or vinyl aromatics
   to the first reaction mixture product, followed by the reaction of the mixture thus obtained and thereby obtaining a second reaction mixture product;
   wherein the first reaction mixture further comprises:
   (M5) nitrile-functional, free-radically polymerizable monomers and
   the dispersion comprises a fluorescent dye.

The dispersions according to the invention are suitable for combination with fluorescent dyes. Without wishing to be bound by theory it is believed that nitrile component (M5) has a beneficial effect on the fluorescent properties of the dye.

Secondary dispersions are those aqueous dispersions which are first polymerized in a homogeneous organic medium and then redispersed in an aqueous medium with neutralization, generally without the addition of external emulsifiers.

For the purposes of the present invention, acrylic acid or methacrylic acid are also defined as (meth)acrylic acid.

Suitable hydroxyl-functional monomers (M1) include ethylenically unsaturated, hydroxyl-containing monomers, such as hydroxyalkyl esters of unsaturated carboxylic acids, preferably hydroxyalkyl (meth)acrylates having 2 to 12, preferably 2 to 6, carbon atoms in the hydroxyalkyl radical. Examples of particularly preferred compounds are 2-hydroxyethyl (meth)acrylate, the isomeric hydroxypropyl (meth)acrylates, 2-, 3- and 4-hydroxybutyl (meth)acrylates, and the isomeric hydroxyhexyl (meth)acrylates.

Examples for hydroxyl- and carboxyl-free monomers (M2) employed are acrylates and methacrylates having 1 to 8 carbon atoms in the alcohol moiety of the ester group. The alcohol moiety is preferably aliphatic and may be linear or branched.

Examples of suitable monomers of component (M2) are methyl, ethyl, n-propyl, isopropyl, n-butyl, isobutyl, tert-butyl, the isomeric pentyl, hexyl, 2-ethylhexyl and octyl (meth)acrylates. Particularly suitable vinyl aromatics are styrene and optionally substituted styrenes. Preferred monomers (M2) are methyl, n-butyl, isobutyl, tert-butyl (meth)acrylate and also 2-ethylhexyl acrylate and styrene.

Suitable acid-functional free-radically polymerizable monomers (M3) include olefinically unsaturated monomers containing carboxylic acid or carboxylic anhydride groups, such as acrylic acid, methacrylic acid, β-carboxyethyl acrylate, crotonic acid, fumaric acid, maleic anhydride, itaconic acid or monoalkyl esters of dibasic acids or anhydrides, such as maleic acid monoalkyl esters, for example.

Examples for hydroxyl- and carboxyl-free monomers (M4) employed are acrylates and methacrylates having 1 to 8 carbon atoms in the alcohol moiety of the ester group. The alcohol moiety is preferably aliphatic and may be linear or branched.

Examples of suitable monomers of component (M4) are methyl, ethyl, n-propyl, isopropyl, n-butyl, isobutyl, tert-butyl, the isomeric pentyl, hexyl, 2-ethylhexyl and octyl (meth)acrylates. Particularly suitable vinyl aromatics are styrene and optionally substituted styrenes. Preferred monomers (M4) are methyl, n-butyl, isobutyl, tert-butyl (meth)acrylate and also 2-ethylhexyl acrylate and styrene.

A preferred example for nitrile-functional, free-radically polymerizable monomers (M5) is acrylonitrile.

The preparation of the polymer for the dispersion can in principle be carried out by means of conventional free-radical polymerization processes in organic phase. The polymer is preferably prepared in a multi-stage operation of the kind already described in EP 0 947 557 A1 (p. 31.2-p. 41.15) or in EP 024 184 A1 (p. 21.53-p. 41.9). In this operation first a hydrophobic monomer mixture, free from acid groups or with a low acid group content, is metered in, and then, at a later point in time in the polymerization, a more hydrophilic monomer mixture, containing acid groups, is metered in.

Suitable initiators for the polymerization reaction include organic peroxides such as di-tert-butyl peroxide or tert-butyl peroxy-2-ethylhexanoate and also azo compounds such as 2,2'-Azodiisobutyronitrile (AIBN). The amounts of initiator used depend on the desired molecular weight. For reasons of process reliability and of greater ease of handling it is possible also to use peroxide initiators as a solution in suitable organic solvents.

Before, during or after the dispersion of the polymer in water, the acid groups present are converted at least proportionally into their salt form by addition of suitable neutralizing agents. Suitable neutralizing agents are organic amines or water-soluble inorganic bases, such as soluble metal hydroxides, metal carbonates or metal hydrogen carbonates, for example, such as sodium hydroxide or potassium hydroxide, for example. Preferred neutralizing amines are butyldiethanolamine, triethanolamine, triethylamine, dimethylethanolamine, ethyldiisopropylamine, methyldiethanolamine and 2-aminomethyl-2-methylpropanol.

After the end of the polymerization reaction the polymer solution is dispersed in water or by addition of water. The neutralization of the acid groups with amine(s) and/or bases and hence their conversion into salt groups may take place prior to dispersing or in parallel, by addition of the neutralizing amine together with the dispersing water, or by addition in parallel to the dispersing water. The degree of neutralization can be between 50% and 150%, preferably between 60% to 120%.

After dispersing has taken place, a proportion or the entirety of a solvent used can be removed by distillation.

The pH of the secondary polyacrylate dispersions may be between 5 and 11, preferably between 6 and 10. The solids contents may be between 20% and 60%, preferably between 35 and 55%, by weight. The solids contents are determined as specified in DIN-EN ISO 3251. The average particle sizes of the dispersion may be between 20 and 400 nm, as determined by the Z-average by dynamic light scattering in dispersion.

The present invention will be further described in connection with various embodiments and other aspects. They may be combined freely unless the context clearly indicates otherwise. Even when not explicitly mentioned, OH numbers as set forth below are determined according to DIN 53240/2 and acid numbers are determined according to DIN 53402. Molecular weights Mₙ and M_{w} may be determined by means of gel permeation chromatography (GPC/SEC) with a suitable mobile phase.

In one embodiment of the dispersion according to the invention the hydroxy-functional, free-radically polymerizable monomers (M1) are hydroxyalkyl (meth)acrylate monomers. Preferred are hydroxyethyl methacrylate and/or hydroxypropyl methacrylate.

Preferably, the second reaction mixture also comprises (M6) hydroxyalkyl (meth)acrylate monomers such as hydroxyethyl methacrylate and/or hydroxypropyl methacrylate.

In another embodiment of the dispersion according to the invention the hydroxyl- and carboxyl-free (meth)acrylic esters (M2) are alkyl (meth)acrylates. Particularly preferred is 2-ethylhexyl acrylate.

In another embodiment of the dispersion according to the invention the acid-functional, free-radically polymerizable monomers (M3) are (meth)acrylic acid, vinylphosphonic acid and/or esters of vinylphosphonic acid.

In another embodiment of the dispersion according to the invention the hydroxyl- and carboxyl-free (meth)acrylic esters (M4) are alkyl (meth)acrylates. Particularly preferred is 2-ethylhexyl acrylate.

In another embodiment of the dispersion according to the invention the nitrile-functional, free-radically polymerizable monomers (M5) are acrylonitrile.

In another embodiment of the dispersion according to the invention the first reaction mixture comprises (M2) 2-ethylhexyl acrylate and (M5) acrylonitrile and the second reaction mixture comprises (M3) vinylphosphonic acid. Preferably, the second reaction mixture also comprises (M6) hydroxyethyl methacrylate and/or hydroxypropyl methacrylate.

In another embodiment of the dispersion according to the invention the components (M1) to (M5) are present in the following proportions:
(M1) ≥ 10 weight-% to ≤ 30 weight-%, preferably ≥ 15 weight-% to ≤ 20 weight-%
(M2) ≥ 10 weight-% to ≤ 30 weight-%, preferably ≥ 15 weight-% to ≤ 25 weight-%
(M3) ≥ 1 weight-% to ≤ 10 weight-%, preferably ≥ 3 weight-% to ≤ 8 weight-%
(M4) ≥ 1 weight-% to ≤ 10 weight-%, preferably ≥ 3 weight-% to ≤ 8 weight-%
(M5) ≥ 10 weight-% to ≤ 50 weight-%, preferably > 35 weight-% to ≤ 45 weight-%,
the total amount of (M1) to (M5) not exceeding 100 weight-%.

Examples for reaction mixture composition ranges are (all values are given in weight-%; the weight-% total not exceeding 100 weight-%) given below. MMA: methyl methacrylate; HEMA: hydroxyethyl methacrylate; HPMA: hydroxypropyl methacrylate.

| **Nr.** | **E-1** | **E-2** | **E-3** | **E-4** | **E-5** | **E-6** | **E-7** |
|---|---|---|---|---|---|---|---|
| | | | | | | | |
| MMA | | | 12-17 | | | | 12-17 |
| HEMA | 15-20 | | 15-20 | 15-20 | | 7-12 | |
| HPMA | | 15-20 | | | 15-20 | 7-12 | 15-20 |
| Butyl acrylate | 22-27 | 22-27 | 22-27 | 22-27 | 22-27 | 22-27 | 22-27 |
| Acrylonitrile | 18-22 | 18-22 | 18-22 | 18-22 | 18-22 | 18-22 | 18-22 |
| Styrene | 12-17 | 12-17 | | 12-17 | 12-17 | 12-17 | |
| | | | | | | | |
| Methyl methacrylate | | | 3-6 | | | | 3-6 |
| HEMA | 5-10 | | 5-10 | 5-10 | | 5-10 | |
| HPMA | | 5-10 | | | 5-10 | 1-5 | 5-10 |
| Butyl acrylate | 1-5 | 1-5 | 1-5 | 1-5 | 1-5 | 1-5 | 1-5 |
| Styrene | 3-6 | 3-6 | | 3-6 | 3-6 | 3-6 | |
| Acrylic acid | 3-6 | 3-6 | 3-6 | 2-7 | 2-7 | 2-7 | 3-6 |

| **Nr.** | **E-8** | **E-9** | **E-10** | **E-11** | **E-12** | **E-13** | **E-14** |
|---|---|---|---|---|---|---|---|
| | | | | | | | |
| MMA | 12-17 | 12-17 | | | 12-17 | | |
| HEMA | 15-20 | 15-20 | 15-20 | 15-20 | 15-20 | 15-20 | 15-20 |
| Butyl acrylate | 8-12 | 8-12 | 4-8 | 4-8 | 22-27 | 4-8 | 2-6 |
| Acrylonitrile | 15-25 | 15-25 | 35-45 | 35-45 | 15-25 | 35-45 | 35-45 |
| 2-Ethylhexyl acrylate | 12-17 | 12-17 | 12-17 | 12-17 | | 12-17 | 12-17 |
| Acrylic acid | | | | | | | 0,5-3,5 |
| | | | | | | | |
| Methyl methacrylate | 2-6 | | 2-6 | | 1-5 | 1-5 | 2-6 |
| HEMA | 5-10 | 5-10 | 5-10 | 5-10 | 5-10 | 5-10 | 5-10 |
| 2-Ethylhexyl acrylate | | 6-12 | 1-5 | | | | |
| Butyl acrylate | 1-5 | | 1-5 | | 1-5 | 1-5 | 1-5 |
| Acrylonitrile | | | | 2-6 | | | |
| Acrylic acid | 1-5 | 1-5 | 1-5 | 1-5 | 1-5 | 1-5 | 2-6 |

| **Nr.** | **E-15** | **E-16** | **E-17** |
|---|---|---|---|
| | | | |
| Acrylonitrile | 35-45 | 35-45 | 35-45 |
| HEMA | 15-20 | 15-20 | 15-20 |
| Butyl acrylate | 4-8 | 2-6 | 4-8 |
| 2-Ethylhexyl acrylate | 12-17 | 12-17 | 12-17 |
| Methacrylic acid | | 1-3 | |
| | | | |
| MMA | 1-5 | 1-5 | 1-5 |
| HEMA | 5-10 | 5-10 | 5-10 |
| Butyl acrylate | 1-4 | 1-4 | 1-4 |
| Vinylphosphonic acid | 1-10 | | |
| Methacrylic acid | | 1-10 | 1-10 |

In another embodiment of the dispersion according to the invention the polymer in the dispersion has a hydroxyl group content of ≥ 1% to ≤ 8%. The hydroxyl group content of the polymer (in 100% form) is preferably 1% to 5% by weight, preferably 1.5% to 4.5% by weight and with particular preference 1.75% to 3.5% by weight. The calculation of the OH content is based on the stoichiometries of the reaction for forming the polymer and is expressed in weight-%.

The dispersion according to the invention further comprises a fluorescent dye. A fluorescent substance is one that absorbs radiant energy of certain wave lengths and, after a fleeting instance, gives off part of the absorbed energy as quanta of longer wave lengths. In contrast to ordinary light in which the absorbed energy degrades entirely to heat, light emitted from a fluorescent dye adds color to the light returned by simple reflection. As used herein, the term "dye" applies to an organic substance that exhibits strong adsorption of light in the visible or ultraviolet region of the spectrum or inorganic substance that exhibits strong adsorption of light in the visible or ultraviolet region of the spectrum.

The present invention is also directed towards the use of this dispersion as a fluorescent ink.

Examples for suitable fluorescent dyes include fluorescein, fluorescein diacetate, halo-substituted fluorescein, and nitro-substituted fluorescein, furthermore acridine, amino-substituted acridine, and lower alkyl-substituted acridine. Preferred fluorescein dyes are fluorescein, dibromodinitrofluorescein, tetraiodotetrachlorofluorescein, tetrabromofluorescein, 4',5'-dibromofluorescein, 2',7'-dichlorofluorescein, and 4',5-diiodofluorescein. Preferred acridine dyes are acridine, amino-substituted acridine, and lower alkyl substituted acridine.

Illustrative examples of fluorescent dyes which absorb light in the blue to blue-violet region and emit fluorescence in the red region include Rhodamine dyes such as Rhodamine B, Rhodamine 6G, Rhodamine 3B, Rhodamine 101, Rhodamine 110, Sulforhodamine, Basic Violet 11 and Basic Red 2; cyanine dyes, pyridine dyes such as 1-ethyl-2-[4-(p-dimethylaminophenyl)-1,3-butadienyl]-pyridinium perchlorate (Pyridine 1) and oxazine dyes.

Illustrative examples of fluorescent dyes which absorb light in the blue to blue-violet region and emit fluorescence in the green region include coumarin dyes such as 3-(2'-benzothiazolyl)-7-diethylaminocoumarin (Coumarin 6), 3-(2'-benzoimidazolyl)-7-diethylaminocoumarin (Coumarin 7), 3-(2'-N-methylbenzoimidazolyl)-7-diethylaminocoumarin (Coumarin 30) and 2,3,5,6-1H,4H-tetrahydro-8-trifluoromethylquinolidine (9,9a,1-gh)coumarin (Coumarin 153); naphthalimide dyes such as Solvent Yellow 11 and Solvent Yellow 116; and coumarin-based colorants such as Basic Yellow 51. Alternatively, use may be made of various other colorants having the above type of fluorescence (e.g., direct dyes, acid dyes, basic dyes, disperse dyes).

A preferred fluorescent dye is basic yellow 40 (CAS number 35869-60-4).

As customary paint auxiliaries and additives, the substances known to the skilled person may be present in the dispersion of the invention, such as defoamers, thickeners, pigments, dispersing assistants, matting agents, catalysts, anti-skinning agents, anti-settling agents and/or emulsifiers.

The present invention is also directed towards a method for the production of an aqueous secondary polyacrylate dispersion comprising the steps of:
a) reacting a first reaction mixture comprising:
   (M1) hydroxy-functional, free-radically polymerizable monomers; and
   (M2) hydroxyl- and carboxyl-free (meth)acrylic esters having C1 to C8 hydrocarbon radicals in the alcohol moiety and/or vinyl aromatics,
   thereby obtaining a first reaction mixture product;
b) adding a second reaction mixture comprising:
   (M3) acid-functional, free-radically polymerizable monomers; and
   (M4) hydroxyl- and carboxyl-free (meth)acrylic esters having C1 to C8 hydrocarbon radicals in the alcohol moiety and/or vinyl aromatics
   to the first reaction mixture product, followed by the reaction of the mixture thus obtained and thereby obtaining a second reaction mixture product;
   wherein the first reaction mixture further comprises:
   (M5) nitrile-functional, free-radically polymerizable monomers and
   the method further comprises the steps:
c) adding a neutralizing agent and water; and
d) adding a fluorescent dye.

In the interest of avoiding unnecessary repetitions, full reference is made to the foregoing description with respect to details, definitions and further embodiments of the method.

In one embodiment of the method according to the invention the first reaction mixture comprises:
(M2) 2-ethylhexyl acrylate and
(M5) acrylonitrile;
and the second reaction mixture comprises:
(M3) vinylphosphonic acid.

In another embodiment of the method according to the invention the components (M1) to (M5) are present in the following proportions:
(M1) ≥ 10 weight-% to ≤ 30 weight-%, preferably ≥ 15 weight-% to ≤ 20 weight-%
(M2) ≥ 10 weight-% to ≤ 30 weight-%, preferably ≥ 15 weight-% to ≤ 25 weight-%
(M3) ≥ 1 weight-% to ≤ 10 weight-%, preferably ≥ 3 weight-% to ≤ 8 weight-%
(M4) ≥ 1 weight-% to ≤ 10 weight-%, preferably ≥ 3 weight-% to ≤ 8 weight-%
(M5) ≥ 10 weight-% to ≤ 50 weight-%, preferably ≥ 35 weight-% to ≤ 45 weight-%,
the total amount of (M1) to (M5) not exceeding 100 weight-%.

The present invention will be further described with reference to the following examples without wishing to be limited by them.

### Glossary:

Porofor® N: 2,2'-Azodiisobutyronitrile
MMA: Methyl methacrylate
HEMA:Hydroxyethyl methacrylate
HPMA: Hydroxypropyl methacrylate
DMEA:N,N-dimethylethanolamine

OH numbers as set forth below are determined according to DIN 53240/2. Acid numbers are determined according to DIN 53402. The solids contents are determined as specified in DIN-EN ISO 3251

### Determination of the Particle Size

The particle sizes were determined by means of dynamic light scattering using an HPPS particle size analyser (Malvern, Worcestershire, UK). Evaluation was made using the Dispersion Technology software 4.10. In order to prevent multiple scattering a highly dilute dispersion of the nanoparticles was prepared. One drop of nanoparticle dispersion was placed in a cell containing approximately 2 ml of the same solvent as the dispersion, shaken and measured in the HPPS analyzer at 20 to 25° C. The relevant parameters of the dispersion medium-temperature, viscosity and refractive index-were taken into account for the evaluation. In the case of organic solvents a glass cell was used. The result obtained was an intensity/or volume/particle diameter plot and also the Z-average for the particle diameter. Attention was paid to the polydispersity index being <0.5.

### Examples 1-14

The co-solvent free dispersions 1-14 were prepared according to the following procedure: a reaction vessel was charged with part 1 and heated to 80 °C. Over the course of 20 minutes parts 2 and 3 were metered in at 80 °C. Parts 4 and 5 were then added over the course of 1 hour and 30 minutes. The mixture was allowed to react at 80 °C for one further hour. After cooling to 70 °C part DMEA was added, the mixture was stirred for 15 minutes and dispersed in water.

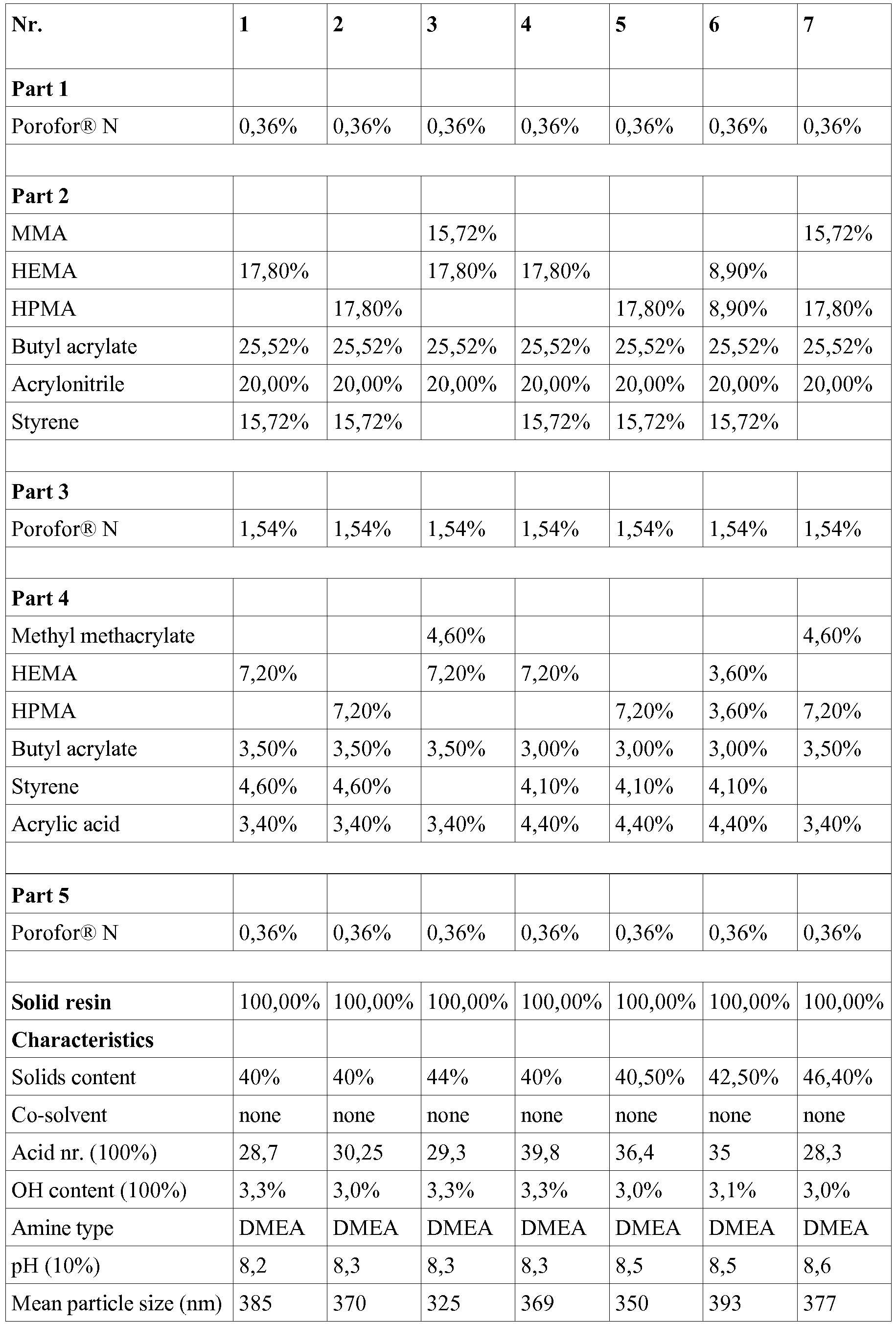

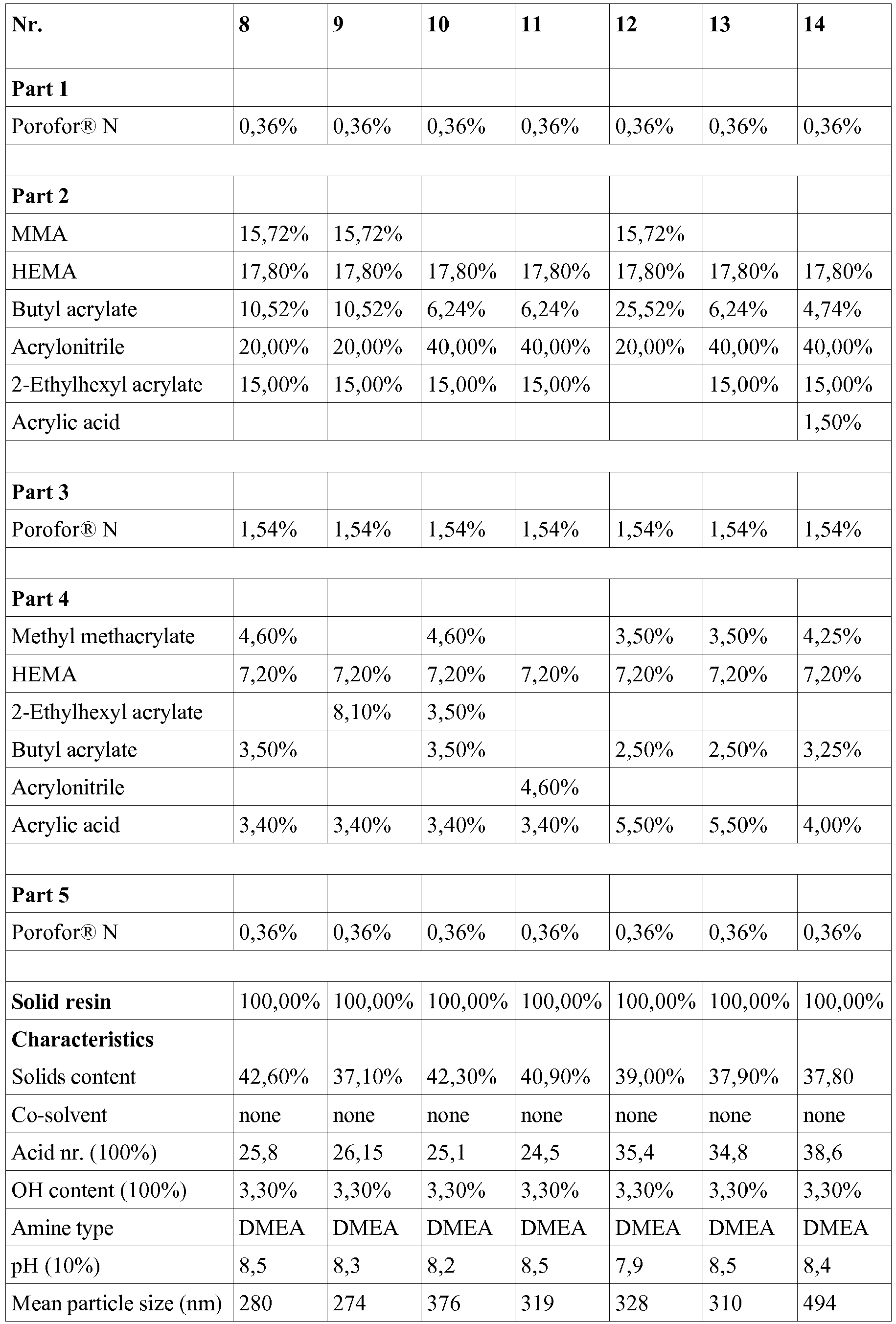

### Examples 15-17:

The dispersions 15-17 were prepared according to the following procedure: a reaction vessel was charged with part 1 and heated to 80 °C (mild reflux). Over the course of 20 minutes part 2 was metered in at 80 °C. Immediately after that parts 3 and 4 were metered into the vessel in parallel over the course of 4 hours and 30 minutes. Parts 5 and 6 were then added over the course of 1 hour and 30 minutes. The mixture was allowed to react at 80 °C for one further hour. After cooling to 70 °C part 7 was added, the mixture was stirred for 15 minutes and dispersed in part 8. The butanone was removed in vacuo.

| **Nr.** | **15** | **15** | **16** | **16** | **17** | **17** |
|---|---|---|---|---|---|---|
| | | | | | | |

| **Part 1** | | | | | | |
|---|---|---|---|---|---|---|
| Butanone | 463,30 g | | 463,30 g | | 463,30 g | |
| | | | | | | |

| **Part 2** | | | | | | |
|---|---|---|---|---|---|---|
| Porofor® N | 3,60 g | 0,36% | 3,60 g | 0,36% | 3,60 g | 0,36% |
| Butanone | 32,40 g | | 32,40 g | | 32,40 g | |
| | | | | | | |

| **Part 3** | | | | | | |
|---|---|---|---|---|---|---|
| Acrylonitrile | 400,00 g | 40,00% | 400,00 g | 40,00% | 400,00 g | 40,00% |
| HEMA | 178,00 g | 17,80% | 178,00 g | 17,80% | 178,00 g | 17,80% |
| Butyl acrylate | 62,40 g | 6,24% | 44,40 g | 4,44% | 62,40 g | 6,24% |
| 2-Ethylhexyl acrylate | 150,00 g | 15,00% | 150,00 g | 15,00% | 150,00 g | 15,00% |
| Methacrylic acid | | | 18,00 g | 1,80% | | |
| | | | | | | |

| **Part 4** | | | | | | |
|---|---|---|---|---|---|---|
| Porofor® N | 15,40 g | 1,54% | 15,40 g | 1,54% | 15,40 g | 1,54% |
| Butanone | 138,60 g | | 138,60 g | | 138,60 g | |
| | | | | | | |

| **Part 5** | | | | | | |
|---|---|---|---|---|---|---|
| MMA | 35,00 g | 3,50% | 38,50 g | 3,85% | 29,50 g | 2,95% |
| HEMA | 72,00 g | 7,20% | 72,00 g | 7,20% | 72,00 g | 7,20% |
| Butyl acrylate | 25,00 g | 2,50% | 28,50 g | 2,85% | 19,50 g | 1,95% |
| Vinylphosphonic acid | 55,00 g | 5,50% | | | | |
| Methacrylic acid | | | 48,00 g | 4,80% | 66,00 g | 6,60% |

| **Part 6** | | | | | | |
|---|---|---|---|---|---|---|
| Porofor® N | 3,60 g | 0,36% | 3,60 g | 0,36% | 3,60 g | 0,36% |
| Butanone | 32,4 g | | 32,4 g | | 32,4 g | |
| | | | | | | |
| **Monomer total** | 1000,00 g | 100,00% | 1000,00 g | 100,00% | 1000,00 g | 100,00% |
| **Total** | 1667,00 g | 60,00% | 1667,00 g | 60,00% | 1667,00 g | 60,00% |
| | | | | | | |

| **Part 7** | | | | | | |
|---|---|---|---|---|---|---|
| DMEA | 71,40 g | for ND* 78,8% | 41,40 g | for ND* 105% | 71,40 g | for ND* 105% |
| | | | | | | |

| **Part 8** | | | | | | |
|---|---|---|---|---|---|---|
| Deionized water | 1000,00 g | for 50% solids | 1000,00 g | for 50% solids | 1000,00 g | for 50% solids |
| | | | | | | |

| **Characteristics** | | | | | | |
|---|---|---|---|---|---|---|
| Solids content | 37,9% | | 32,1% | | 35,9% | |
| Acidnr. (100%) | 59,12 | | 47,95 | | 49,2 | |
| OH content (100%) | 3,3% | | 3,3% | | 3,3% | |
| pH (10%) | 8,2 | | 8,5 | | 7,9 | |
| Mean particle size | 422 nm | | 510 nm | | 438 nm | |

| | | | | | | |
|---|---|---|---|---|---|---|
| *: ND = neutralization degree | | | | | | |

### Application testing:

To 45 g of the dispersions 1 to 17, respectively, was added a solution of 0,7 g basic yellow 40 (CAS number 35869-60-4) and 1 g Arkopal® N300 (nonylphenol polyglycol ether) in 45 g water and the resulting mixture was heated to 50 °C to 60 °C for about 20 minutes. The samples were then irradiated with a fluorescence lamp and the result inspected optically by a technician. All samples showed a satisfying fluorescence. The samples prepared from dispersions 15-17 were ranked as the best samples, in particular the sample prepared from dispersion 15.

## Claims

1. An aqueous secondary polyacrylate dispersion obtainable by a method comprising the steps of:
a) reacting a first reaction mixture comprising:
(M1) hydroxy-functional, free-radically polymerizable monomers; and
(M2) hydroxyl- and carboxyl-free (meth)acrylic esters having C1 to C8 hydrocarbon radicals in the alcohol moiety and/or vinyl aromatics,
thereby obtaining a first reaction mixture product;
b) adding a second reaction mixture comprising:
(M3) acid-functional, free-radically polymerizable monomers; and
(M4) hydroxyl- and carboxyl-free (meth)acrylic esters having C1 to C8 hydrocarbon radicals in the alcohol moiety and/or vinyl aromatics
to the first reaction mixture product, followed by the reaction of the mixture thus obtained and thereby obtaining a second reaction mixture product;
**wherein** the first reaction mixture further comprises:
(M5) nitrile-functional, free-radically polymerizable monomers and
the dispersion comprises a fluorescent dye.

2. The dispersion according to claim 1, wherein the hydroxy-functional, free-radically polymerizable monomers (M1) are hydroxyalkyl (meth)acrylate monomers.

3. The dispersion according to claim 1, wherein the hydroxyl- and carboxyl-free (meth)acrylic esters (M2) are alkyl (meth)acrylates.

4. The dispersion according to claim 1, wherein the acid-functional, free-radically polymerizable monomers (M3) are (meth)acrylic acid, vinylphosphonic acid and/or esters of vinylphosphonic acid.

5. The dispersion according to claim 1, wherein the hydroxyl- and carboxyl-free (meth)acrylic esters (M4) are alkyl (meth)acrylates.

6. The dispersion according to claim 1, wherein the nitrile-functional, free-radically polymerizable monomers (M5) are acrylonitrile.

7. The dispersion according to claim 1, wherein the first reaction mixture comprises:
(M2) 2-ethylhexyl acrylate and
(M5) acrylonitrile;
and wherein the second reaction mixture comprises:
(M3) vinylphosphonic acid.

8. The dispersion according to claim 1, wherein the components (M1) to (M5) are present in the following proportions:
(M1) ≥ 10 weight-% to ≤ 30 weight-%
(M2) ≥ 10 weight-% to ≤ 30 weight-%
(M3) ≥ 1 weight-% to ≤ 10 weight-%
(M4) ≥ 1 weight-% to ≤ 10 weight-%
(M5) ≥ 10 weight-% to ≤ 50 weight-%,
the total amount of (M1) to (M5) not exceeding 100 weight-%.

9. The dispersion according to claim 1, wherein the polymer in the dispersion has a hydroxyl group content of ≥ 1% to ≤ 8%.

10. Use of a dispersion according to claim 1 as a fluorescent ink.

11. A method for the production of an aqueous secondary polyacrylate dispersion comprising the steps of:
a) reacting a first reaction mixture comprising:
(M1) hydroxy-functional, free-radically polymerizable monomers; and
(M2) hydroxyl- and carboxyl-free (meth)acrylic esters having C1 to C8 hydrocarbon radicals in the alcohol moiety and/or vinyl aromatics,
thereby obtaining a first reaction mixture product;
b) adding a second reaction mixture comprising:
(M3) acid-functional, free-radically polymerizable monomers; and
(M4) hydroxyl- and carboxyl-free (meth)acrylic esters having C1 to C8 hydrocarbon radicals in the alcohol moiety and/or vinyl aromatics
to the first reaction mixture product, followed by the reaction of the mixture thus obtained and thereby obtaining a second reaction mixture product;
wherein the first reaction mixture further comprises:
(M5) nitrile-functional, free-radically polymerizable monomers and
the method further comprises the steps:
c) adding a neutralizing agent and water; and
d) adding a fluorescent dye.

12. The method according to claim 11, wherein the first reaction mixture comprises:
(M2) 2-ethylhexyl acrylate and
(M5) acrylonitrile;
and wherein the second reaction mixture comprises:
(M3) vinylphosphonic acid.

13. The method according to claim 11, wherein the components (M1) to (M5) are present in the following proportions:
(M1) ≥ 10 weight-% to ≤ 30 weight-%
(M2) ≥ 10 weight-% to ≤ 30 weight-%
(M3) ≥ 1 weight-% to ≤ 10 weight-%
(M4) ≥ 1 weight-% to ≤ 10 weight-%
(M5) ≥ 10 weight-% to ≤ 50 weight-%,
the total amount of (M1) to (M5) not exceeding 100 weight-%.

## Patentansprüche

1. Wässrige Polyacrylat-Sekundärdispersion, erhältlich durch ein Verfahren, bei dem man:
a) eine erste Reaktionsmischung, die
(M1) hydroxyfunktionelle, radikalisch polymerisierbare Monomere und
(M2) hydroxy- und carboxylgruppenfreie (Meth) acrylsäureester mit C1-C8-Kohlenwasserstoffresten im Alkoholteil und/oder Vinylaromaten
umfasst, umsetzt, wodurch man ein Produkt einer ersten Reaktionsmischung erhält;
b) eine zweite Reaktionsmischung, die
(M3) säurefunktionelle, radikalisch polymerisierbare Monomere und
(M4) hydroxy- und carboxylgruppenfreie (Meth) acrylsäureester mit C1-C8-Kohlenwasserstoffresten im Alkoholteil und/oder Vinylaromaten
umfasst, zu dem Produkt der ersten Reaktionsmischung gibt und dann die so erhaltene Mischung umsetzt und dadurch ein Produkt einer zweiten Reaktionsmischung erhält;
wobei die erste Reaktionsmischung ferner:
(M5) nitrilfunktionelle, radikalisch polymerisierbare Monomere
umfasst und die Dispersion einen Fluoreszenzfarbstoff umfasst.

2. Dispersion nach Anspruch 1, wobei es sich bei den hydroxyfunktionellen, radikalisch polymerisierbaren Monomeren (M1) um Hydroxyalkyl (meth) acrylatMonomere handelt.

3. Dispersion nach Anspruch 1, wobei es sich bei den hydroxy- und carboxylgruppenfreien (Meth) acrylsäureestern (M2) um Alkyl(meth)acrylate handelt.

4. Dispersion nach Anspruch 1, wobei es sich bei den säurefunktionellen, radikalisch polymerisierbaren Monomeren (M3) um (Meth) acrylsäure, Vinylphosphonsäure und/oder Ester von Vinylphosphonsäure handelt.

5. Dispersion nach Anspruch 1, wobei es sich bei den hydroxy- und carboxylgruppenfreien (Meth) acrylsäureestern (M4) um Alkyl(meth)acrylate handelt.

6. Dispersion nach Anspruch 1, wobei es sich bei den nitrilfunktionellen, radikalisch polymerisierbaren Monomeren (M5) um Acrylnitril handelt.

7. Dispersion nach Anspruch 1, wobei die erste Reaktionsmischung
(M2) 2-Ethylhexylacrylat und
(M5) Acrylnitril
umfasst und wobei die zweite Reaktionsmischung
(M3) Vinylphosphonsäure
umfasst.

8. Dispersion nach Anspruch 1, wobei die Komponenten (M1) bis (M5) in den folgenden Anteilen vorliegen:
(M1) ≥ 10 Gew.-% bis ≤ 30 Gew.-%
(M2) ≥ 10 Gew.-% bis ≤ 30 Gew.-%
(M3) ≥ 1 Gew.-% bis ≤ 10 Gew.-%
(M4) ≥ 1 Gew.-% bis ≤ 10 Gew.-%
(M5) ≥ 10 Gew.-% bis ≤ 50 Gew.-%,
wobei die Gesamtmenge von (M1) bis (M5) nicht mehr als 100 Gew.-% beträgt.

9. Dispersion nach Anspruch 1, wobei das Polymer in der Dispersion einen Hydroxygruppengehalt von ≥ 1% bis ≤ 8% aufweist.

10. Verwendung einer Dispersion nach Anspruch 1 als fluoreszierende Tinte.

11. Verfahren zur Herstellung einer wässrigen Polyacrylat-Sekundärdispersion, bei dem man:
a) eine erste Reaktionsmischung, die
(M1) hydroxyfunktionelle, radikalisch polymerisierbare Monomere und
(M2) hydroxy- und carboxylgruppenfreie (Meth) acrylsäureester mit C1-C8-Kohlenwasserstoffresten im Alkoholteil und/oder Vinylaromaten
umfasst, umsetzt, wodurch man ein Produkt einer ersten Reaktionsmischung erhält;
b) eine zweite Reaktionsmischung, die
(M3) säurefunktionelle, radikalisch polymerisierbare Monomere und
(M4) hydroxy- und carboxylgruppenfreie (Meth) acrylsäureester mit C1-C8-Kohlenwasserstoffresten im Alkoholteil und/oder Vinylaromaten
umfasst, zu dem Produkt der ersten Reaktionsmischung gibt und dann die so erhaltene Mischung umsetzt und dadurch ein Produkt einer zweiten Reaktionsmischung erhält;
wobei die erste Reaktionsmischung ferner:
(M5) nitrilfunktionelle, radikalisch polymerisierbare Monomere
umfasst und man ferner:
c) ein Neutralisationsmittel und Wasser zugibt und
d) einen Fluoreszenzfarbstoff zugibt.

12. Verfahren nach Anspruch 11, bei dem die erste Reaktionsmischung
(M2) 2-Ethylhexylacrylat und
(M5) Acrylnitril
umfasst und bei dem die zweite Reaktionsmischung
(M3) Vinylphosphonsäure
umfasst.

13. Verfahren nach Anspruch 11, bei dem die Komponenten (M1) bis (M5) in den folgenden Anteilen vorliegen:
(M1) ≥ 10 Gew.-% bis ≤ 30 Gew.-%
(M2) ≥ 10 Gew.-% bis ≤ 30 Gew.-%
(M3) ≥ 1 Gew.-% bis ≤ 10 Gew.-%
(M4) ≥ 1 Gew.-% bis ≤ 10 Gew.-%
(M5) ≥ 10 Gew.-% bis ≤ 50 Gew.-%,
wobei die Gesamtmenge von (M1) bis (M5) nicht mehr als 100 Gew.-% beträgt.

## Revendications

1. Dispersion aqueuse secondaire de polyacrylate pouvant être obtenue par un procédé comprenant les étapes consistant à :
a) faire réagir un premier mélange réactionnel comprenant :
(M1) des monomères à fonction hydroxy polymérisables par voie radicalaire ; et
(M2) des esters (méth) acryliques exempts de groupes hydroxyle et carboxyle ayant des radicaux hydrocarbonés en C1 à C8 dans la fraction alcoolique et/ou des composés vinyliques aromatiques,
ce qui permet d'obtenir un produit de premier mélange réactionnel ;
b) ajouter un second mélange réactionnel comprenant :
(M3) des monomères à fonction acide polymérisables par voie radicalaire ; et
(M4) des esters (méth) acryliques exempts de groupes hydroxyle et carboxyle ayant des radicaux hydrocarbonés en C1 à C8 dans la fraction alcoolique et/ou des composés vinyliques aromatiques
au produit de premier mélange réactionnel, l'ajout étant suivi de la réaction du mélange ainsi obtenu et de cette manière de l'obtention d'un produit de second mélange réactionnel ;
**dans laquelle** le premier mélange réactionnel comprend en outre :
(M5) des monomères à fonction nitrile polymérisables par voie radicalaire et
la dispersion comprenant un colorant fluorescent.

2. Dispersion selon la revendication 1, dans laquelle les monomères à fonction hydroxy polymérisables par voie radicalaire (M1) sont des monomères (méth) acrylates d'hydroxyalkyle.

3. Dispersion selon la revendication 1, dans laquelle les esters (méth) acryliques exempts de groupes hydroxyle et carboxyle (M2) sont des (méth) acrylates d'alkyle.

4. Dispersion selon la revendication 1, dans laquelle les monomères à fonction acide polymérisables par voie radicalaire (M3) sont l'acide (méth) acrylique, l'acide vinylphosphonique et/ou des esters d'acide vinylphosphonique.

5. Dispersion selon la revendication 1, dans laquelle les esters (méth) acryliques exempts de groupes hydroxyle et carboxyle (M4) sont des (méth) acrylates d'alkyle.

6. Dispersion selon la revendication 1, dans laquelle les monomères à fonction nitrile polymérisables par voie radicalaire (M5) sont l'acrylonitrile.

7. Dispersion selon la revendication 1, dans laquelle le premier mélange réactionnel comprend :
(M2) de l'acrylate de 2-éthylhexyle et
(M5) de l'acrylonitrile ;
et dans laquelle le second mélange réactionnel comprend :
(M3) de l'acide vinylphosphonique.

8. Dispersion selon la revendication 1, dans laquelle les constituants (M1) à (M5) sont présents dans les proportions suivantes :
(M1) ≥ 10 % en poids à ≤ 30 % en poids
(M2) ≥ 10 % en poids à ≤ 30 % en poids
(M3) ≥ 1 % en poids à ≤ 10 % en poids
(M4) ≥ 1 % en poids à ≤ 10 % en poids
(M5) ≥ 10 % en poids à ≤ 50 % en poids,
la quantité totale de (M1) à (M5) ne dépassant pas 100 % en poids.

9. Dispersion selon la revendication 1, le polymère dans la dispersion ayant une teneur en groupes hydroxyle de ≥ 1 % à ≤ 8 %.

10. Utilisation d'une dispersion selon la revendication 1 en tant qu'encre fluorescente.

11. Procédé pour la production d'une dispersion aqueuse secondaire de polyacrylate comprenant les étapes consistant à :
a) faire réagir un premier mélange réactionnel comprenant :
(M1) des monomères à fonction hydroxy polymérisables par voie radicalaire ; et
(M2) des esters (méth) acryliques exempts de groupes hydroxyle et carboxyle ayant des radicaux hydrocarbonés en C1 à C8 dans la fraction alcoolique et/ou des composés vinyliques aromatiques,
ce qui permet d'obtenir un produit de premier mélange réactionnel ;
b) ajouter un second mélange réactionnel comprenant :
(M3) des monomères à fonction acide polymérisables par voie radicalaire ; et
(M4) des esters (méth) acryliques exempts de groupes hydroxyle et carboxyle ayant des radicaux hydrocarbonés en C1 à C8 dans la fraction alcoolique et/ou des composés vinyliques aromatiques
au produit de premier mélange réactionnel, l'ajout étant suivi de la réaction du mélange ainsi obtenu et de cette manière de l'obtention d'un produit de second mélange réactionnel ;
**dans lequel** le premier mélange réactionnel comprend en outre :
(M5) des monomères à fonction nitrile polymérisables par voie radicalaire et
le procédé comprenant en outre les étapes consistant à :
c) ajouter un agent de neutralisation et de l'eau ; et
d) ajouter un colorant fluorescent.

12. Procédé selon la revendication 11, dans lequel le premier mélange réactionnel comprend :
(M2) de l'acrylate de 2-éthylhexyle et
(M5) de l'acrylonitrile ;
et dans lequel le second mélange réactionnel comprend :
(M3) de l'acide vinylphosphonique.

13. Procédé selon la revendication 11, dans lequel les constituants (M1) à (M5) sont présents dans les proportions suivantes :
(M1) ≥ 10 % en poids à ≤ 30 % en poids
(M2) ≥ 10 % en poids à ≤ 30 % en poids
(M3) ≥ 1 % en poids à ≤ 10 % en poids
(M4) ≥ 1 % en poids à ≤ 10 % en poids
(M5) ≥ 10 % en poids à ≤ 50 % en poids,
la quantité totale de (M1) à (M5) ne dépassant pas 100 % en poids.
